# EUROPEAN PATENT APPLICATION

(11) **EP 4 685 053 A1**
(43) Date of publication of application: **28.01.2026**
(21) Application number: 25191056.8
(22) Date of filing: 22.07.2025
(51) Int. Cl.: B64C 27/06, B64C 27/12, B64D 31/06, B64D 35/08, F02C 9/42, F02C 6/02

(54) **SYSTEM AND METHOD FOR EXITING AN ASYMMETRIC OPERATING REGIME**

(30) Priority: 22.07.2024 US 202418780190
(71) Applicant: PRATT & WHITNEY CANADA CORP., Longueuil, Québec J4G 1A1 (CA)
(72) Inventor: DURANLEAU-HENDRICKX, Louis, (01BE5) Longueuil, J4G 1A1 (CA); DZAKOVIC, Dusan, (01BE5) Longueuil, J4G 1A1 (CA); HENNING, Andrea, (01BE5) Longueuil, J4G 1A1 (CA); STROBINO, Tiago A., (01BE5) Longueuil, J4G 1A1 (CA)
(74) Representative: Dehns

(57) **Abstract**

A system (105) comprises a first engine (102) configured to have an active mode of operation and a standby mode of operation and a second engine (104) configured to have the active mode of operation and the standby mode of operation. The controller (210) is configured to detect a first exit condition having a first priority level, implement a first engine power profile responsive to a detection of a first exit condition having the first priority level for the second engine (104) in a standby mode of operation, detect a second exit condition having a second priority level for the second engine (104) during implementation of the first engine power profile, maintain the first engine power profile responsive to a determination that the second priority level is not greater than the first priority level, and implement a second engine power profile responsive to a determination that the second priority level is greater than the first priority level.

## Description

### TECHNICAL FIELD

This disclosure relates generally to asymmetric engine operation. More specifically, this disclosure relates to mid-exit from one mode of engine operation change to a second mode of engine operation change.

### BACKGROUND

Within multi-engine systems for aircraft, such as a rotorcraft (e.g., helicopter), the engines will operate in different power modes during certain flight conditions. Within some aircraft conditions (cruise), the power needs are substantially stable, and one engine of a multi-engine system can be operated in a high-power "active" mode and another engine can be operated in a lower power (which could potentially be no power) "standby" mode. Operation of the engines in this manner provide fuel saving opportunities to the aircraft. However, there could be other reasons why it could be desirable to operate the engines in an asymmetric fashion.

Within the mode of operation wherein one engine is in a low-powered, or standby mode could also be referred to as an asymmetric operating regime (AOR). While the aircraft could be able to operate during standard cruise conditions with only one of the two engines providing motive power to the aircraft, the standby engine must be able to quickly transition out of its low-power operating condition should the need arise. This might be, for example, if the pilot requires additional power quickly in order to perform a flight maneuver, or in the event of an emergency caused by a mechanical failure of the active engine. Thus, there is a need for a manner of controlling the standby engine when a different exit type trigger arises.

### SUMMARY

This disclosure relates to a system and method for switching out of an engine exit mode during execution of the exit mode.

In a first example, the system includes a first engine configured to have an active mode of operation and a standby mode of operation and a second engine configured to have the active mode of operation and the standby mode of operation. A controller is configured to detect a first exit condition having a first priority level for the second engine in the standby mode of operation, implement a first engine power profile responsive to the detection of the first exit condition having the first priority level for the second engine in the standby mode of operation, detect a second exit condition having a second priority level for the second engine during implementation of the first engine power profile, determine if the second priority level is greater than the first priority level, maintain the first engine power profile responsive to a determination that the second priority level is not greater than the first priority level and implement a second engine power profile responsive to a determination that the second priority level is greater than the first priority level.

Any single one or any combination of the following features could be used with the examples above. The system where the controller is further configured to detect a third exit condition having a third priority level for the second engine, determine if the third priority level is greater than the second priority level; maintain the second engine power profile responsive to a determination that the third priority level is not greater than the second priority level and implement a third engine power profile responsive to a determination that the third priority level is greater than the second priority level. The controller is further configured to determine if the first exit condition requires a slow exit power profile and inhibit implementation of the second engine power profile responsive to a determination that the first exit condition requires the slow exit power profile. The controller is further configured to determine if the first exit condition requires a slow exit power profile and maintain the first engine power profile without a warm-up phase responsive to a determination that the first exit condition requires the slow exit power profile. The controller is configured to maintain the first engine profile implementation to prevent adverse behavior for the second engine. When implementing the second engine power profile the controller is further configured to implement the second engine power profile with a rate limiter to smooth engine power increases. When implementing the second engine power profile the controller is further configured to blend the first engine power profile with the second engine power profile.

In a second example, an apparatus includes a first connection configured to connect to a first engine and a second connection configured to connect to a second engine. A controller is coupled to the first connection and the second connection. The coupler is configured to detect a first exit condition having a first priority level for an engine configured to have an active mode of operation and a standby mode of operation, wherein the engine is in the standby mode of operation, implement a first engine power profile responsive to the detection of the first exit condition having the first priority level for the second engine in the standby mode of operation, detect a second exit condition having a second priority level for the second engine during implementation of the first engine power profile, determine if the second priority level is greater than the first priority level, maintain the first engine power profile responsive to a determination that the second priority level is not greater than the first priority level and implement a second engine power profile responsive to a determination that the second priority level is greater than the first priority level.

Any single one or any combination of the following features could be used with the examples above. The apparatus where the controller is further configured to determine if the first exit condition requires a slow exit power profile and inhibit implementation of the second engine power profile responsive to a determination that the first exit condition requires the slow exit power profile. The controller is further configured to determine if the first exit condition requires a slow exit power profile and maintain the first engine power profile without a warm-up phase responsive to a determination that the first exit condition requires the slow exit power profile. The controller is configured to maintain the first engine profile implementation to prevent adverse behavior for the second engine. When implementing the second engine power profile the controller is further configured to implement the second engine power profile with a rate limiter to smooth engine power increases. When implementing the second engine power profile the controller is further configured to blend the first engine power profile with the second engine power profile.

In a third example, a method also includes detecting a first exit condition having a first priority level for an engine configured to operate in an active mode of operation and a standby mode of operation in the standby mode of operation using a controller, implementing a first engine power profile responsive to the detection of the first exit condition having the first priority level for the engine in the standby mode of operation using the controller, detecting a second exit condition having a second priority level for the engine during implementation of the first engine power profile using the controller, determining if the second priority level is greater than the first priority level using the controller, maintaining the first engine power profile responsive to a determination that the second priority level is not greater than the first priority level using the controller and implementing a second engine power profile responsive to a determination that the second priority level is greater than the first priority level using the controller.

Any single one or any combination of the following features could be used with the examples above. The method could include detecting a third exit condition having a third priority level for the engine using the controller, determining if the third priority level is greater than the second priority level using the controller, maintaining the second engine power profile responsive to a determination that the third priority level is not greater than the second priority level, and implementing a third engine power profile responsive to a determination that the third priority level is greater than the second priority level. The method could include determining if the first exit condition requires a slow exit power profile using the controller, and inhibiting implementation of the second engine power profile responsive to a determination that the first exit condition requires the slow exit power profile using the controller. The method could include determining if the first exit condition requires a slow exit power profile using the controller, and maintaining the first engine power profile without a warm-up phase responsive to a determination that the first exit condition requires the slow exit power profile using the controller. The method could include maintaining the first engine profile implementation to prevent adverse behavior for the engine using the controller. Implementing the second engine power profile further could include implementing the second engine power profile with a rate limiter to smooth engine power increases using the controller. Implementing the second engine power profile further could include blending the first engine power profile with the second engine power profile using the controller.

Other technical features could be readily apparent to one skilled in the art from the following Figs., descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
Fig. 1 illustrates a schematic view of a multi-engine aircraft in accordance with this disclosure;
Fig. 2 illustrates a schematic diagram of an exemplary multi-engine system for the aircraft of Fig. 1, showing cross-sectional views of two gas turbine engines in accordance with this disclosure;
Fig. 3 illustrates a block diagram of an example architecture for operating a multi-engine aircraft in accordance with this disclosure;
Fig. 4 illustrates a process for performing an Idle Cruise Regime (ICR) mid-exit change in accordance with this disclosure;
Fig. 5 illustrates an engine power profile for a fast power change and a slow power change in accordance with this disclosure;
Fig. 6 illustrates a mid-exit change within an engine power profile in accordance with this disclosure;
Fig.7 illustrates a process for altering a ICR mid-exit change; and
Fig. 8 illustrates an engine power profile for the process of Fig. 7 in accordance with this disclosure.

### DETAILED DESCRIPTION

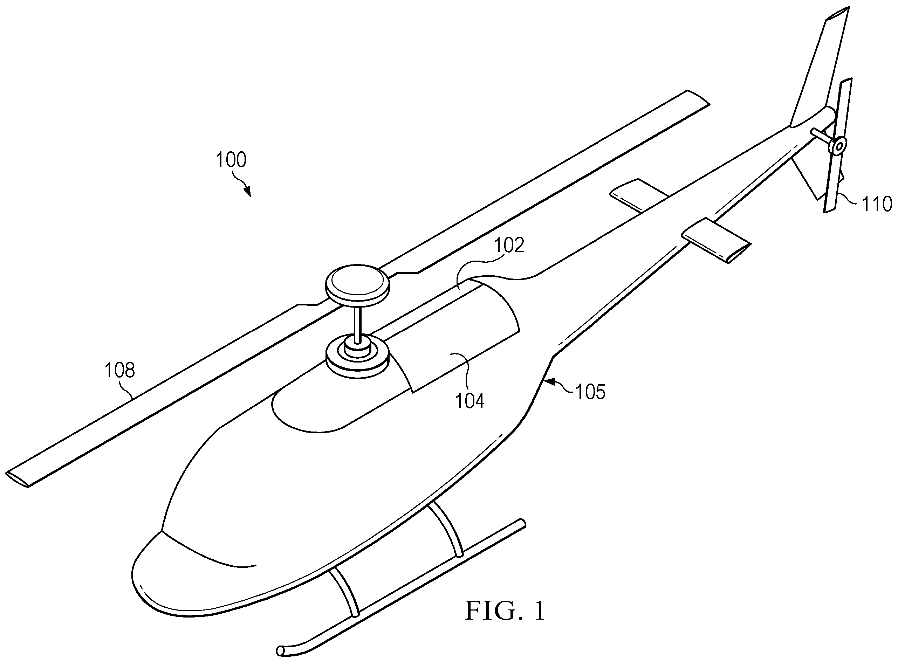

Figs. 1 through 8, described below, and the various embodiments used to describe the principles of the present disclosure are by way of illustration only and should not be construed in any way to limit the scope of this disclosure. Those skilled in the art will understand that the principles of the present disclosure could be implemented in any type of suitably arranged device or system.

There are described herein methods and systems for operating a multi-engine aircraft. Under certain conditions, it can be desirable to operate the aircraft in a so-called "asymmetric operating regime" (AOR), which is described in greater detail hereinbelow. When operated in the AOR, multiple engines of the aircraft, which could be a multi-engine helicopter or other rotorcraft, are operated at different output power levels.

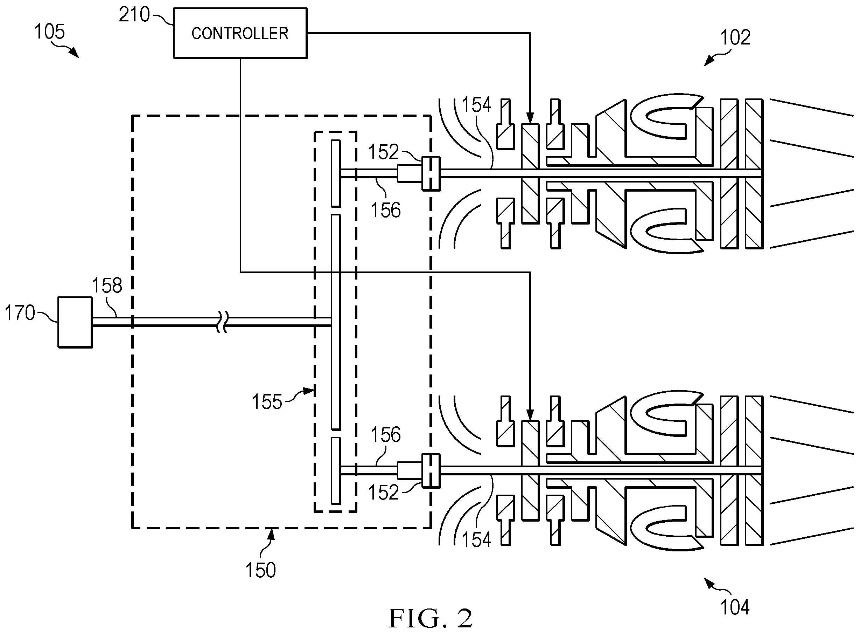

Fig. 1 illustrates an exemplary multi-engine aircraft 100, which in this case is a helicopter. The aircraft 100 includes at least two gas turbine engines 102, 104. These two engines 102, 104 could be interconnected, in the case of the depicted helicopter application, by a common gearbox to form a multi-engine system 105, as shown in FIG. 2, which drives a main rotor 108.

Turning now to Fig. 2, illustrated is an example multi-engine system 105 that could be used as a power plant for an aircraft, including but not limited to a rotorcraft such as the helicopter 100. The multi-engine system 105 could include two or more gas turbine engines 102, 104. In the case of a helicopter application, these gas turbine engines 102, 104 will be turboshaft engines. Control of the multi-engine system 105 is effected by one or more controller(s) 210, which could be Full Authority Digital Engine Controller(s) (FADEC(s)), Electronic Engine Controller(s) (EEC(s)), Engine Control Unit(s) (ECU(s)), or the like, that are programmed to manage, as described herein below, the operation of the engines 102, 104 to reduce an overall fuel burn, particularly during sustained cruise operating regimes, wherein the aircraft is operated at a sustained (steady-state) cruising speed and altitude. The cruise operating regime is typically associated with the operation of prior art engines at equivalent part-power, such that each engine contributes approximately equally to the output power of the system 105. Other phases of a typical helicopter mission include transient phases like take-off, climb, stationary flight (hovering), approach and landing. Cruise could occur at higher altitudes and higher speeds, or at lower altitudes and speeds, such as during a search phase of a search-and-rescue mission.

More particularly, the multi-engine system 105 of this embodiment includes first and second turboshaft engines 102, 104 interconnected by a common output gearbox 150 (also referred to herein as a "main gearbox") to drive a common load 170. In one embodiment, the common load 170 could comprise a rotary wing of a rotary-wing aircraft. For example, the common load 170 could be a main rotor 108 and a tail rotor 110 of the aircraft 100. Depending on the type of the common load 170 and on the operating speed thereof, each of turboshaft engines 102, 104 could be drivingly coupled to the common load 170 via the output gearbox 150, which could be of the speed-reduction type.

For example, the gearbox 150 could have a plurality of transmission shafts 156 to receive mechanical energy from respective output shafts 154 of respective turboshaft engines 102, 104. The gearbox 150 could be configured to direct at least some of the combined mechanical energy from the plurality of the turboshaft engines 102, 104 toward a common output shaft 158 for driving the common load 170 at a suitable operating (e.g., rotational) speed. It is understood that the multi-engine system 105 could also be configured, for example, to drive accessories and/or other elements of an associated aircraft. As will be described, the gearbox 150 could be configured to permit the common load 170 to be driven by either of the turboshaft engines 102, 104 or, by a combination of both engines 102, 104 together.

In particular, in one embodiment, the output shaft 154 of each engine 102, 104 could be connected through a coupling (not shown) to an input module (not shown) from the gearbox 150. Each input module could comprise a first reduction stage (not shown) and a clutch 152, allowing each engine 102, 104 to independently and individually disengage itself from the gearbox 150, and as such from any downstream load as in 170. Both input modules could be connected within the gearbox 150 and meet at a second reduction stage 155, the first reduction stage and the second reduction stage 155 having their own reduction ratio. The common output shaft 158 could couple the second reduction stage 155 to the tail rotor 110 while another shaft (not shown) could couple the second reduction stage 155 to the main rotor 108.

In the present description, while the aircraft conditions (e.g., cruise speed and altitude) are substantially stable, the engines 102, 104 of the system 105 could be operated asymmetrically, with one engine operated in a high-power "active" mode and the other engine operated in a lower power (which could be no power, in some cases) "standby" mode. Doing so could provide fuel saving opportunities to the aircraft, however there could be other suitable reasons why the engines are desired to be operated asymmetrically. This operation management could therefore be referred to as an "asymmetric mode" or the aforementioned AOR, wherein one of the two engines is operated in a lower power (which could be no power, in some cases) "standby mode" while the other engine is operated in a high-power "active" mode. Such an asymmetric operation could be engaged, for instance, for a cruise phase of flight (continuous, steady-state flight which is typically at a given commanded constant aircraft cruising speed and altitude). The multi-engine system 105 could be used in an aircraft 100, such as the helicopter, but also has applications in suitable marine and/or industrial applications or other ground operations.

Referring still to Fig. 2, according to the present description, the multi-engine system 105 is driving in this example the helicopter 100 which could be operated in the AOR, in which a first of the turboshaft engines (say, 102) could be operated at high power in an active mode and the second of the turboshaft engines (104 in this example) could be operated in a lower-power (which could be no power, in some cases) standby mode. In one example, the first turboshaft engine 102 could be controlled by the controller(s) 210 to run at full (or near-full) power conditions in the active mode, to supply substantially all or all of a required power and/or speed demand of the common load 170. The second turboshaft engine 104 could be controlled by the controller(s) 210 to operate at lower-power or no-output-power conditions to supply substantially none or none of a required power and/or speed demand of the common load 170. In some embodiments, the clutch 152 could be provided to permit each engine 102, 104 to be engaged and disengaged (i.e., clutched and de-clutched from the aircraft's main gearbox, as desired.

Controller(s) 210 could control the engine's governing on power according to an appropriate schedule or control regime. The controller(s) 210 could comprise a first controller for controlling the first engine 102 and a second controller for controlling the second engine 104. The first controller and the second controller could be in communication with each other in order to implement the operations described herein. In some embodiments, a single controller 210 could be used for controlling the first engine 102 and the second engine 104.

In another example, the AOR of the engines 102, 104 could be achieved through the one or more controller's 210 differential control of fuel flow to the engines 102, 104, as described in U.S. Patent Application Publication No. 2020/0049025. Low fuel flow could also include zero fuel flow in some examples.

Although various differential control between the engines 102, 104 of the engine system 105 are possible, in one particular embodiment the controller(s) 210 could correspondingly control fuel flow rate to each engine 102, 104 accordingly. In the case of the standby engine, a fuel flow (and/or a fuel flow rate) provided to the standby engine could be controlled to be between 70% and 99.5% less than the fuel flow (and/or the fuel flow rate) provided to the active engine. In the AOR, the standby engine could be maintained between 70% and 99.5% less than the fuel flow to the active engine. In some embodiments, the fuel flow rate difference between the active and standby engines could be controlled to be in a range of 70% and 90% of each other, with fuel flow to the standby engine being 70% to 90% less than the active engine. In some embodiments, the fuel flow rate difference could be controlled to be in a range of 80% and 90%, with fuel flow to the standby engine being 80% to 90% less than the active engine.

In another embodiment, the controller 210 could operate one engine (say 104) of the multiengine system 105 in a standby mode at a power substantially lower than a rated (e.g., cruise) power level of the engine, and in some embodiments at substantially zero output power and in other embodiments less than 10% output power relative to a reference power (provided at a reference fuel flow). Alternatively, in some embodiments, the controller(s) 210 could control the standby engine to operate at a power in a range of 0% to 1% of a rated full-power of the standby engine (i.e., the power output of the second engine to the common gearbox remains between 0% to 1% of a rated full-power of the second engine when the second engine is operating in the standby mode).

In another example, the engine system 105 of Fig. 2 could be operated in an AOR by control of the relative speed of the engines using controller(s) 210, that is, the standby engine is controlled to a target low speed and the active engine is controlled to a target high speed. Such a low speed operation of the standby engine could include, for example, a rotational speed that is less than a typical ground idle speed of the engine (i.e., a "sub-idle" engine speed). Still other control regimes could be available for operating the engines in the AOR, such as control based on a target pressure ratio, or other suitable control parameters.

Although the examples described herein illustrate two engines, AOR is applicable to more than two engines, whereby at least one of the multiple engines is operated in a low-power standby mode while the remaining engines are operated in the active mode to supply all or substantially all of a required power and/or speed demand of a common load.

In use, the first turboshaft engine (say 102) could operate in the active mode while the other turboshaft engine (say 104) could operate in the standby mode, as described above. During operation in the AOR, if the helicopter 100 needs a power increase (expected or otherwise), the second turboshaft engine 104 could be required to provide more power relative to the low power conditions of the standby mode, and possibly return immediately to a high- or full-power condition. This could occur, for example, in an emergency condition of the multi-engine system 105 powering the helicopter 100, wherein the "active" engine loses power and the power recovery from the lower power to the high power could take some time. Even absent an emergency, it will be desirable to repower the standby engine to exit the AOR.

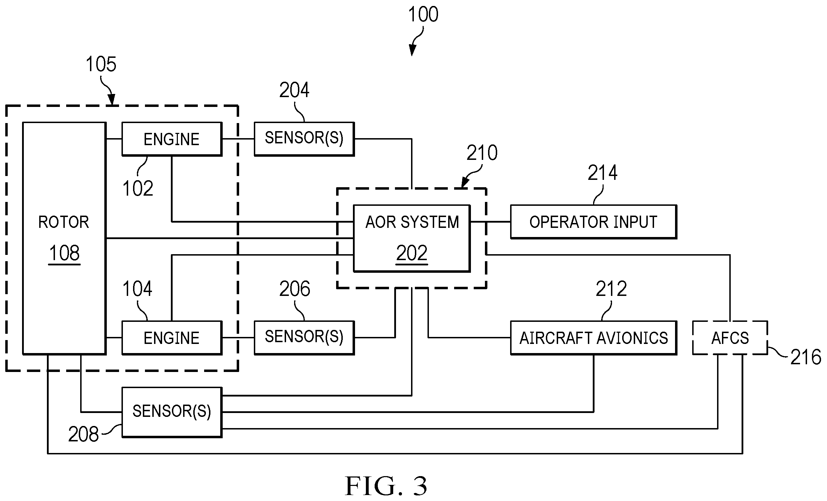

With reference to Fig. 3 , the aircraft 100, comprising the engines 102, 104 and the rotor 108, is illustrated using a block diagram. More than two engines 102, 104 could be present on a same aircraft 100. The engines 102, 104 are mechanically coupled to the main rotor 108, for instance as illustrated in Fig. 2, for causing the rotor 108 to rotate and produce thrust for the aircraft 100. Although Fig. 3 illustrates a singular rotor 108, it should be noted that the aircraft 100 can include any number of rotors, including multiple main rotors, one or more tail rotors, and the like. Collectively, the engines 102, 104, and the rotor 108 form part of the multi-engine system 105, which is controlled by the controller 210.

The multi-engine system 105 can be controlled by way of the controller 210, as described hereinabove. The controller 210 can be composed of various devices, including one or more FADEC(s), EEC(s), ECU(s), rotor controller(s), or any other suitable devices for controlling operation of the engines 102, 104, and/or the rotor 108. In some embodiments, the operation of the engines 102, 104, and of the rotor 108 is controlled by way of one or more actuators, mechanical linkages, hydraulic systems, and the like. The controller 210 can be coupled to the actuators, mechanical linkages, hydraulic systems, and the like, in any suitable fashion for effecting control of the engines 102, 104 and/or of the rotor 108. For example, if a change in the operating conditions of the aircraft 100 is detected without any corresponding change in inputs from an operator of the aircraft 100, the controller 210 can adjust inputs provided to the engines 102, 104 and/or the rotor 108 in order to compensate for the uncommanded change.

The controller 210 can be provided with an AOR system 202 which is configured to control operation of the engines 102, 104, prior to entry into the AOR, when the aircraft 100 is operating in the AOR, and upon exit from the AOR. As previously noted, in some embodiments, when operating in the AOR, one of the engines, for example engine 102, is set as the so-called "active engine", and the other engines, in this example engine 104, is set as the so-called "standby engine". It should be noted that the association between engines 102, 104 and the active/standby status is solely for the purposes of example. In certain embodiments, prior to entry into, or exit from, the AOR, it is desirable for various operating parameters of the engines 102, 104, the rotor 108, and/or the aircraft 100, to meet certain operating conditions associated with the AOR. In particular, it is desirable for these operating parameters to be within predetermined bands and/or at, below, or above certain predetermined values. When one or more operating parameters no longer meet the operating conditions, the AOR could be exited.

One or more sensors 204, 206 are coupled to the engines 102, 104, for acquiring data about the operating parameters of the engines 102, 104. Additionally, sensor(s) 208 are coupled to the rotor 108 for acquiring data about the operating parameters of the rotor 108. The sensor(s) 204, 206, 208 could be any suitable type of sensor used to measure (continuously or periodically) operating parameters. The sensor(s) 204, 206, 208 includes, but are not limited to, speed sensors, acceleration sensors, pressure sensors, temperature sensors, altitude sensors, and the like. The sensor(s) 204, 206, 208, can be coupled to the controller 210 in any suitable fashion, including any suitable wired and/or wireless coupling techniques. It should be noted that not all the operating parameters used to determine whether certain aircraft operating conditions for the AOR are met or no longer met come from the sensor(s) 204, 206, 208. In some embodiments, operating parameters could be received from one or more other sources, including but not limited to a FADEC, an ECU, an EEC, or any related accessories that control any aspect of engine performance. In some embodiments, measurements obtained from the sensor(s) 204, 206, 208 are used to calculate or determine other related parameters.

Aircraft parameters could also be monitored to determine whether certain aircraft operating conditions for the AOR are met or no longer met. In some embodiments, the aircraft parameters are obtained from aircraft avionics 212, e.g., from sensor(s) 208. The aircraft avionics 212 could include any and all systems related to control and management of the aircraft 100, such as but not limited to communications, navigation, display, monitoring, flight-control systems, collision-avoidance systems, flight recorders, weather systems, and aircraft management systems. The aircraft avionics 212 are therefore communicatively coupled to the controller 210, including the AOR system 202. In some embodiments, the aircraft avionics 212 perform all monitoring of the aircraft parameters and communicate with the AOR system 202 when the aircraft operating conditions for the AOR are met or no longer met. Alternatively or in combination therewith, monitoring of some or all operating parameters of the aircraft is performed externally to the AOR system 202 and involves an operator of the aircraft 100 (e.g., a pilot) monitoring some or all of the parameters and providing input (e.g., instructions) to the controller 210, and more specifically to the AOR system 202, via operator input 214.

In some embodiments, the controller 210, and particularly the AOR system 202, effects changes in flight controls via an optional automatic flight control system (AFCS) 216 communicatively coupled with the controller 210, the sensor(s) 208, and the rotor 108. The AFCS 216 could be configured for adjusting one or more inputs acquired from the operator input 214. In some embodiments, the AFCS 216 can adjust the inputs by way of mechanical linkages, actuators, or the like, which adjust the position and/or orientation of various surfaces and mechanical machines. In other embodiments, the AFCS 216 can adjust analog or digital signals transmitted to actuators or other devices which control operation of the engines 102, 104, and/or the rotor 108. Other embodiments could apply.

In some embodiments, the AOR system 202 monitors engine and/or aircraft operating conditions required to enter and exit the AOR. Monitoring could be done continuously or by periodical queries. If at any time the operating conditions are not respected, the AOR system 202 either exits (i.e., aborts) or disables (i.e., prevents entry into) the AOR. In addition, while the aircraft 100 could be able to operate (e.g., during standard cruise conditions) with only one of the two engines 102, 104 providing motive power to the aircraft 100, it could in some instances be necessary for the standby engine to transition out of its low power operating condition. This might be the case, for example, if the pilot requires additional power quickly in order to perform a flight maneuver, or in the event of an emergency caused by mechanical failure of the active engine. However, such rapid transitions from low-power to high-power running conditions cause rapid temperature and pressure increases within the transitioning engine (i.e. the standby engine). Such thermal gradients cause significant thermal stresses on the transitioning engine, which can negatively impact part lifespan.

As will be discussed further below, it is therefore proposed herein to use the controller 210, and more particularly the AOR system 202, to provide two distinct modes of operation (also referred to herein as "exit modes") for transitioning a standby engine from low/no power operation to high(er) power operation and therefore exit the AOR. The two modes of operation are an emergency exit mode and a non-emergency (or "normal") exit mode. In the emergency exit mode, the AOR system 202 is configured to cause a rapid increase in engine power of both the standby engine and the active engine. In the non-emergency exit mode, the power output of the standby engine is increased at a slower pace, over one or more transitional phases (referred to herein as "warm-up" phases or periods), such as to limit thermal gradients and extend hardware life.

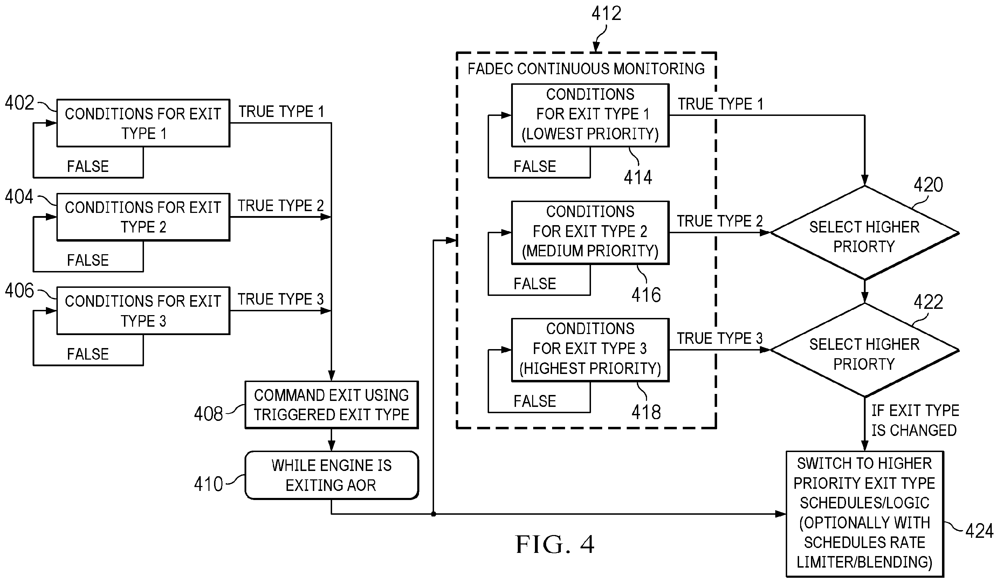

Referring now to Fig. 4 there is illustrated a process for performing a mid-exit change from an AOR power change within an asymmetric engine operation. During AOR operation, as shown at 402, 404, 406, the FADEC, or other system controller, continuously monitors a range of conditions to determine if AOR operation can be continued or should be exited/aborted. Various conditions that could initiate an exit of the standby engine to active mode includes a normal recovery condition 402 that is commanded by the pilot. The normal recovery condition 402 will require a slow engine power up with a possible warm-up period. Another condition could be an abnormal slow recovery condition 404 that is commanded by the FADEC. The abnormal slow recovery condition 404 requires a slow power recovery with a possible warm-up period. A further condition could be an abnormal fast recovery condition 406 commanded by the FADEC that requires a fastest emergency power recovery without a warm-up period for the engine. Responsive to the detected exit condition 402, 404, 406, the exit command for the standby engine is initiated at step 408 based upon the detected condition. The engine then proceeds to execute the exit profile at step 410 associated with the detected condition.

Depending upon the detected exit type (normal recovery commanded by pilot condition 402, abnormal slow recovery condition 404 commanded by FADEC, abnormal fast recovery condition 406 commanded by FADEC), the AOR exit profile/schedule will be optimized. For example, normal AOR exit will be slow with a potential warm-up period under conditions 402 and 404 to maximize passenger comfort and engine durability. Abnormal fast recovery 406 will be fast as possible to minimize power recovery time in the case of an emergency.

Referring now generally to 412 there is illustrated the process by which the FADEC continues to monitor for additional exit conditions during the execution of the exit type that was previously initiated at step 408. If one of these additional exit conditions are detected at step 412, a mid-exit from the existing exit profile/schedule could be initiated. The process for monitoring for a further exit condition could monitor for a type I exit condition 414 that comprises the lowest priority condition, a type II exit condition 416 that comprises the medium priority condition or a type III exit condition 418 that comprises the highest priority condition. If the type I exit condition 414 (normal exit) is detected control passes to inquiry step 420 and selection of the highest priority exit between the existing exit condition and the detected exit condition is selected. If the type II exit condition 416 (abnormal slow exit) is detected control passes to step 420 and the selection of the highest priority exit between the existing exit condition and the detected exit condition is selected. If the type III exit condition 418 (abnormal fast exit) is detected, control passes to step 422 and the selection of the highest priority exit between the existing exit condition and the detected exit condition is selected. Thus, there is a switch between the types of exits if a higher priority exit type is detected while mid exit for a previously instituted exit type.

For example, if an AOR normal exit condition 402 is requested by the pilot, but while the engine is increasing speed/power at a slower rate the other active engine fails, the FADEC will then issue an emergency AOR engine power condition 406 in order to minimize AOR engine power recovery time.

While the engine is operating in AOR mode, if a condition for one exit type is detected, the FADEC will schedule the engine to exit AOR mode according to the profile/schedule of the triggered exit. However, if a further exit condition is detected during the AOR exit period at either 414, 416, 418, the FADEC will switch to a different exit type based upon the priority. Thus, if either of inquiry steps 420 or 422 determines that the new exit condition comprises a lower priority exit type then there is no FADEC action and the current exit profile/schedule is maintained. If inquiry steps 420 or 422 determine they are the same AOR exit type, there is also no FADEC action and the current power profile/schedule is maintained. However, if inquiry steps 420 or 422 determine that the new condition is triggered for a higher priority exit type, the system switches to a higher priority AOR exit profile/schedule at step 424. After the higher priority profile/schedule is initiated at step 424, the system continues to monitor for exit conditions and switching to a higher priority exit profile/schedule could be repeated if a higher exit type is triggered. Thus, multiple switches between exit profiles/schedules could be implemented. While the above description has described the use of three levels of exit conditions, it will be realized that any number of exit condition levels could potentially be implemented.

While the above description has been used for increasing from a lower priority exit condition to a higher priority exit condition, the system could also be implemented to switch down to a lower priority exit condition in order to slow the engine exit to maximize passenger comfort and increase engine durability. The implementation would be similar in that the system could monitor for the detection of a lower priority exit condition and make a determination as to whether implementation of a slower exit profile/schedule would be possible or beneficial. This option should only be provided if the higher priority exit condition is no longer detected.

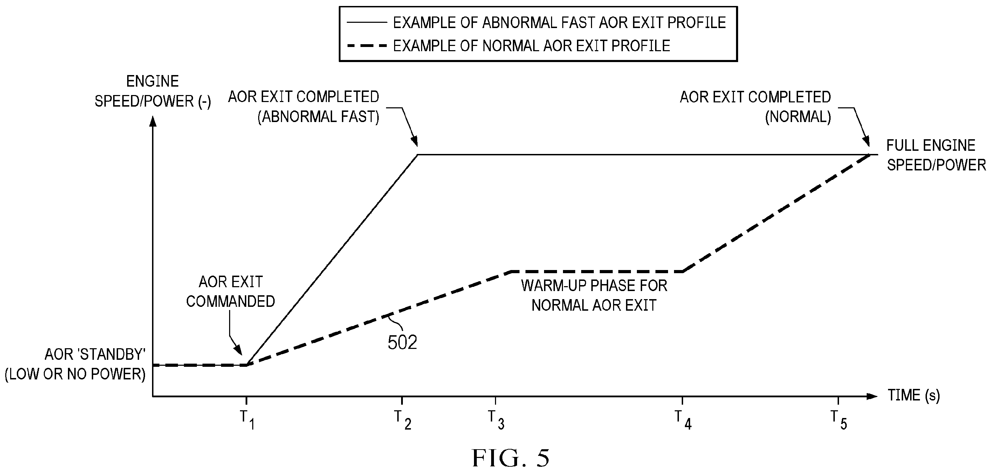

Referring now to Fig. 5, there is illustrated the difference in exit profiles/schedules that could be implemented in response to the differing exit conditions. Line 502 illustrates a normal exit or abnormal slow exit process profile wherein an exit condition received at time t₁ causes power to start increasing at a first rate from t₁ to t₃. The engine is then in a warm-up phase from time t₃ to t₄ wherein the power is at a constant level. Finally, the engine completes the power up from time t₄ to time t₅. Similarly, for an abnormal fast recovery 406 detection of the exit condition at the time t₁ causes power to rapidly increase from time t₁ to time t₂ directly to a full power mode.

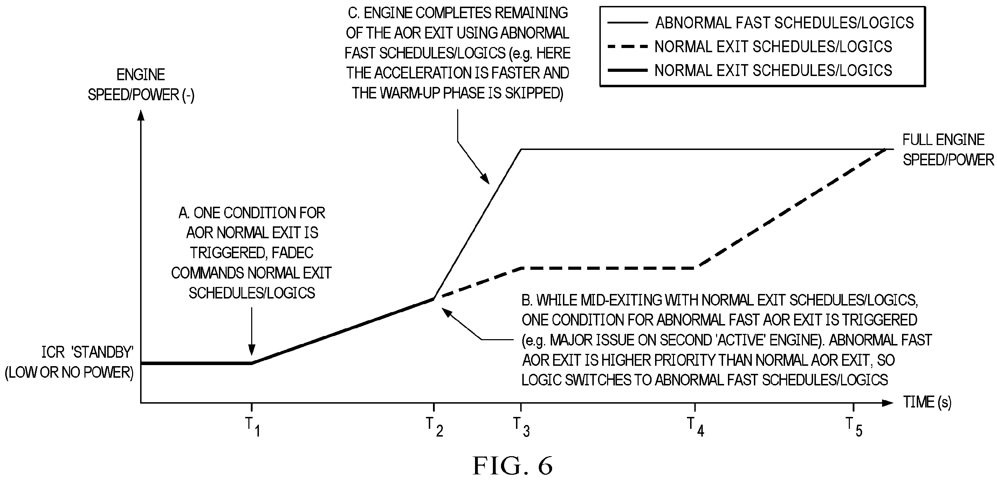

Referring now to Fig. 6, there is illustrated the exit profile/schedule when the engine switches from a lower priority exit condition to a higher priority exit condition during execution of the lower priority exit profile/schedule. The standby engine is operating at a low power mode up until the time t₁ when an exit condition is detected. The system initiates a slower exit power up from time t₁ to time t₂. At time t₂, a second exit condition is detected having a higher priority than the exit condition at the time t₁. Responsive to the higher priority exit condition, the fast exit profile/schedule is initiated at time t₂. From time t₂ to time t₃, the fast profile/schedule quickly raises the engine power to full speed. The engine remains at full power from time t₃ onward. The dashed line from time t₂ to time t₅ illustrates the profile/schedule for engine power up that the engine would have remained on had the higher priority exit condition not been detected. It should be noted that the exit type profile/schedule could be identical for different types of triggering conditions within the system. The engine power will thus be the same for different types of exit trigger conditions.

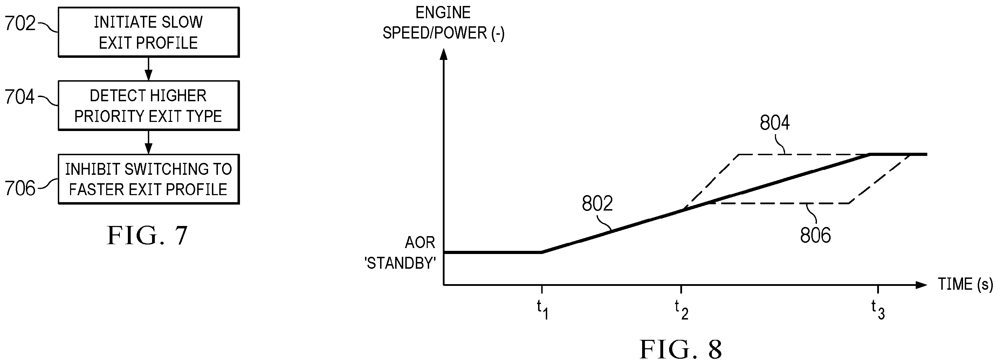

Referring now to Fig. 7, there is illustrated a process of an alternative manner for controlling switching between lower and higher priority exit profile/schedules. Some AOR exit conditions require slower exit schedules to prevent adverse engine/aircraft behavior such as a rotating stall or engine surge. If the initial AOR exit type is triggered at step 702 with a slower exit profile/schedule because of specific conditions that require the slower exit and engine power up, the system could inhibit during the entire exit process for speeding up of the exit even if a higher priority exit type condition is triggered. Thus, once the slower exit profile/schedule has been initiated at step 702, if a higher priority exit type is detected at step 704, the system will inhibit the switching to the faster exit profile at step 706. For example, application of DC AGB (direct current accessory gear box) load is one (but not the only) condition for an abnormally slow exit. In the presence of load, the engine acceleration must be reduced and could not be accelerated with the profile/schedule of an abnormally fast exit. Thus, if a load application triggers an abnormally slow exit and during the abnormally slow exit an abnormal fast exit condition is detected, the switching between profiles/schedules must be inhibited to prevent engine stall/surge.

The switching inhibition could be related to only a part of the exit type profile/schedule. For example, as illustrated in Fig. 8, if an abnormally slow exit is commanded because of load and initiated at time t₁ and an abnormal fast condition is triggered at time t₂, the switch in engine acceleration schedule could be inhibited such that the engine continues to power up from t2 to t3 along line 802 rather than increasing engine power up according to line 804. However, the warm-up phase could be bypassed to enable faster engine power up rather than using the warmup profile as shown generally at line 806.

Alternatively, when switching to a higher priority exit type mid exit, the change from the previous exit type to the new exit type profile/schedule could be done gradually with a slower increased rate of power to prevent a sudden change in the acceleration reference. This can be achieved by a profile/schedule subject to a rate limiter or by a blending of profile/schedules between the slower exit and faster exit profiles.

It could be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, could mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items could be used, and only one item in the list could be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A system (105) comprising:
a first engine (102) configured to have an active mode of operation and a standby mode of operation;
a second engine (104) configured to have the active mode of operation and the standby mode of operation;
a controller (210) configured to:
detect a first exit condition having a first priority level for the second engine (104) in the standby mode of operation;
implement a first engine power profile responsive to the detection of the first exit condition having the first priority level for the second engine (104) in the standby mode of operation;
detect a second exit condition having a second priority level for the second engine (104) during implementation of the first engine power profile;
determine if the second priority level is greater than the first priority level;
maintain the first engine power profile responsive to a determination that the second priority level is not greater than the first priority level; and
implement a second engine power profile responsive to a determination that the second priority level is greater than the first priority level.

2. The system of Claim 1, wherein the controller (210) is further configured to:
detect a third exit condition having a third priority level for the second engine (104);
determine if the third priority level is greater than the second priority level;
maintain the second engine power profile responsive to a determination that the third priority level is not greater than the second priority level; and
implement a third engine power profile responsive to a determination that the third priority level is greater than the second priority level.

3. The system of Claim 1 or 2, wherein the controller (210) is further configured to:
determine if the first exit condition requires a slow exit power profile; and
inhibit implementation of the second engine power profile responsive to a determination that the first exit condition requires the slow exit power profile.

4. The system of Claim 1, 2 or 3, wherein the controller (210) is further configured to:
determine if the first exit condition requires a slow exit power profile; and
maintain the first engine power profile without a warm-up phase responsive to a determination that the first exit condition requires the slow exit power profile.

5. The system of any preceding claim, wherein the controller (210) is configured to maintain the first engine profile implementation to prevent adverse behavior for the second engine (104).

6. The system of any preceding claim, wherein when implementing the second engine power profile the controller (210) is further configured to implement the second engine power profile with a rate limiter to smooth engine power increases.

7. The system of any preceding claim, wherein when implementing the second engine power profile the controller (210) is further configured to blend the first engine power profile with the second engine power profile.

8. A method comprising:
detecting a first exit condition having a first priority level for an engine (102, 104) configured to operate in an active mode of operation and a standby mode of operation in the standby mode of operation using a controller (210);
implementing a first engine power profile responsive to the detection of the first exit condition having the first priority level for the engine (102, 104) in the standby mode of operation using the controller (210);
detecting a second exit condition having a second priority level for the engine (102, 104) during implementation of the first engine power profile using the controller (210);
determining if the second priority level is greater than the first priority level using the controller (210);
maintaining the first engine power profile responsive to a determination that the second priority level is not greater than the first priority level using the controller (210); and
implementing a second engine power profile responsive to a determination that the second priority level is greater than the first priority level using the controller (210).

9. The method of Claim 8 further comprising:
detecting a third exit condition having a third priority level for the engine (102, 104) using the controller (210);
determining if the third priority level is greater than the second priority level using the controller (210);
maintaining the second engine power profile responsive to a determination that the third priority level is not greater than the second priority level; and
implementing a third engine power profile responsive to a determination that the third priority level is greater than the second priority level.

10. The method of Claim 8 or 9, further comprising:
determining if the first exit condition requires a slow exit power profile using the controller (210); and
inhibiting implementation of the second engine power profile responsive to a determination that the first exit condition requires the slow exit power profile using the controller (210).

11. The method of Claim 8, 9 or 10 further comprising:
determining if the first exit condition requires a slow exit power profile using the controller (210); and
maintaining the first engine power profile without a warm-up phase responsive to a determination that the first exit condition requires the slow exit power profile using the controller (210).

12. The method of any of Claims 8 to 11, further comprising maintaining the first engine profile implementation to prevent adverse behavior for the engine (102, 104) using the controller (210).

13. The method of any of Claims 8 to 12, wherein implementing the second engine power profile further comprises implementing the second engine power profile with a rate limiter to smooth engine power increases using the controller (210).

14. The method of any of Claims 8 to 13, wherein implementing the second engine power profile further comprises blending the first engine power profile with the second engine power profile using the controller (210).
